(19) **Europäisches Patentamt / European Patent Office / Office européen des brevets**

(11) **EP 3 156 446 A1**

(12) **EUROPEAN PATENT APPLICATION**

(43) Date of publication:
19.04.2017 Bulletin 2017/16

(51) Int Cl.:
*C08L 23/08* (2006.01)

(21) Application number: 16201000.3

(22) Date of filing: 31.03.2016

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 31.03.2015 JP 2015073458

(62) Document number(s) of the earlier application(s) in accordance with Art. 76 EPC:
**16163293.0 / 3 075 779**

(71) Applicant: **JSP Corporation**
**Chiyoda-ku, Tokyo 100-0005 (JP)**

(72) Inventors:
- **MORITA, Kazuhiko**
**Tochigi 322-0014 (JP)**
- **KAKUTA, Hirotoshi**
**Tochigi 322-0014 (JP)**
- **TANIGUCHI, Ryuichi**
**Tochigi 322-0014 (JP)**

(74) Representative: **Calamita, Roberto**
**Dehns**
**St Bride's House**
**10 Salisbury Square**
**London**
**EC4Y 8JD (GB)**

Remarks:
This application was filed on 28-11-2016 as a divisional application to the application mentioned under INID code 62.

(54) **POLYETHYLENE-BASED RESIN FOAM SHEET**

(57) There is provided a polyethylene-based resin foam sheet with an appearance density of 90 to 600 kg/m$^3$, including: a polyethylene-based resin foam layer; and a polyolefin-based resin layer laminated on at least one side of the polyethylene-based resin foam layer by coextrusion, wherein the polyolefin-based resin layer comprises a mixture of a polypropylene-based resin with a melting point of 135°C or lower produced using a metallocene catalyst and a polyethylene-based resin, and wherein the polyolefin-based resin layer has a sea-island structure formed on the interface side with the polyethylene-based resin foam layer and a sea-sea structure formed on the surface side of the polyolefin-based resin layer, the sea-island structure having a continuous phase of the polyethylene-based resin and a dispersion phase of the polypropylene-based resin, and the sea-sea structure having a co-continuous phase of the polyethylene-based resin and the polypropylene-based resin.

EP 3 156 446 A1

**Description**

Technical Field

The present invention relates to a polyethylene-based resin foam sheet.

Background Art

Foamed polyethylene is suitably used, for example, in packaging and partitioning materials having cushioning properties by virtue of its flexibility. However, foamed polyethylene is apt to cause environmental stress cracking upon contact with a liquid containing a surfactant and the like under stress, and thus is desired to have high environmental stress cracking resistance (hereinafter abbreviated as "ESCR") to surfactants when used, for example, in packings.
For example, Patent Literature 1 describes that 20 to 80% by weight of an ethylene-polypropylene random copolymer with a melting point of 135°C or lower produced using a metallocene-based catalyst and 80 to 20% by weight of polyethylene can be mixed to be used as a resin which constitutes a molten resin for formation of a resin layer, thereby producing a polyethylene-based resin foam sheet having a high closed cell content and sufficient ESCR characteristics.

Citation List

Patent Literature

Patent Literature 1: JP 2014-55248 A (EP2708344A1,US2014070442A1)

Summary of Invention

Technical Problem

Polyethylene-based resin foam sheets as described in Patent Literature 1 are useful as materials for packings and the like. Packings and the like are typically produced by punching a polyethylene-based resin foam sheet into a circular or doughnut shape. Thus, there has been a need for further improvement in workability (cuttability), for example, in punching of polyethylene-based resin foam sheets. Solution to Problem
The present invention has been made in light of the above circumstances, and an object thereof is to provide a polyethylene-based resin foam sheet having excellent ESCR and excellent workability (cuttability), for example, punching workability.
To achieve the above object, the present invention is a polyethylene-based resin foam sheet with an appearance density of 90 to 600 kg/m$^3$, including: a polyethylene-based resin foam layer; and a polyolefin-based resin layer laminated on at least one side of the polyethylene-based resin foam layer by coextrusion, wherein the polyolefin-based resin layer comprises a mixture of a polypropylene-based resin with a melting point of 135°C or lower produced using a metallocene catalyst and a polyethylene-based resin, and the polyolefin-based resin layer has a sea-island structure formed on the interface side with the polyethylene-based resin foam layer and a sea-sea structure formed on the surface side of the polyolefin-based resin layer, the sea-island structure having a continuous phase of the polyethylene-based resin and a dispersion phase of the polypropylene-based resin, and the sea-sea structure having a co-continuous phase of the polyethylene-based resin and the polypropylene-based resin.
In addition, the present invention is a polyethylene-based resin foam sheet with an appearance density of 90 to 600 kg/m$^3$, including: a polyethylene-based resin foam layer; and a polyolefin-based resin layer laminated on at least one side of the polyethylene-based resin foam layer by coextrusion, wherein the polyolefin-based resin layer comprises a mixture of a polypropylene-based resin with a melting point of 135°C or lower produced using a metallocene catalyst and a polyethylene-based resin, and has a PI value represented by the following relational expression (1) for the melting viscosities ($\eta_{PP}$, $\eta_{PE}$) and volume fractions ($\varphi_{PP}$, $\varphi_{PE}$) of the polypropylene-based resin and the polyethylene-based resin of $2 \leq PI \leq 10$.
[Mathematical Formula 1]

$$\text{(Expression 1) PI value} = (\eta_{PP} \times \varphi_{PE})/(\eta_{PE} \times \varphi_{PP})$$

wherein $\eta_{PP}$: melting viscosity at 190°C and a shear rate of 100s$^{-1}$ of the polypropylene-based resin; ($\varphi_{PE}$: volume fraction of the polyethylene-based resin in the mixed resin; $\eta_{PE}$: melting viscosity at 190°C and a shear rate of 100s$^{-1}$

of the polyethylene-based resin; and $\varphi_{PP}$: volume fraction of the polypropylene-based resin in the mixed resin.

In the polyethylene-based resin foam sheet, it is preferable that the polyolefin-based resin layer comprises a mixture of 20 to 80% by weight of the polypropylene-based resin and 20 to 80% by weight of the polyethylene-based resin (provided that the total of the polypropylene-based resin and the polyethylene-based resin is 100% by weight).

In the polyethylene-based resin foam sheet, it is preferable that the ratio ($\eta_{PP}/\eta_{PE}$) of the melting viscosity ($\eta_{PP}$) at 190°C and a shear rate of 100 sec$^{-1}$ of the polypropylene-based resin to the melting viscosity ($\eta_{PE}$) at 190°C and a shear rate of 100 sec$^{-1}$ of the polyethylene-based resin, in the polyolefin-based resin layer, is 2 or more and less than 7.

In the polyethylene-based resin foam sheet, it is preferable that the melting viscosity at 190°C and a shear rate of 100 sec$^{-1}$ of the mixture of the polyolefin-based resin layer ranges from 500 Pa·s to 2000 Pa·s.

In the polyethylene-based resin foam sheet, it is preferable that the PI value represented by the following relational expression (1) for the melting viscosities ($\eta_{PP}$, $\eta_{PE}$) and volume fractions ($\varphi_{PP}$, $\varphi_{PE}$) of the polypropylene-based resin and the polyethylene-based resin which constitute the polyolefin-based resin layer is $2 \leq PI \leq 10$.

[Mathematical Formula 2]

$$\text{(Expression 1) PI value} = (\eta_{PP} \times \varphi_{PE})/(\eta_{PE} \times \varphi_{PP})$$

wherein $\eta_{PP}$: melting viscosity at 190°C and a shear rate of 100s$^{-1}$ of the polypropylene-based resin; ($\varphi_{PE}$: volume fraction of the polyethylene-based resin in the mixed resin; $\eta_{PE}$: melting viscosity at 190°C and a shear rate of 100s$^{-1}$ of the polyethylene-based resin; and $\varphi_{PP}$: volume fraction of the polypropylene-based resin in the mixed resin.

Advantageous Effects of Invention

The present invention can provide a polyethylene-based resin foam sheet having excellent ESCR and excellent workability (cuttability), for example, punching workability.

Brief Description of Drawings

Fig. 1 is a schematic cross sectional view illustrating one embodiment of a polyethylene-based resin foam sheet according to the present invention.

Fig. 2 is a schematic view illustrating one embodiment of a method for producing the polyethylene-based resin foam sheet according to the present invention.

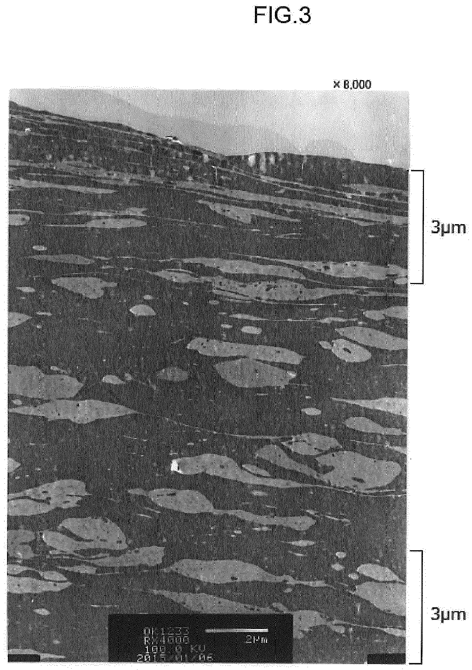

Fig. 3 is a transmission electron microphotograph (x 8000) showing the cross section of the polyolefin-based resin layer of a polyethylene-based resin foam sheet according to Example 1.

Fig. 4 is a transmission electron microphotograph (x 8000) showing the cross section of the polyolefin-based resin layer of a polyethylene-based resin foam sheet according to Comparative Example 1.

Description of Embodiments

Typically, resin sheets are punched by cutting with a punching blade. In a foam sheet which comprises a resin layer laminated on a foam layer, the blade pressure of the punching blade is easily dispersed by the foam layer. Therefore, the tearing force produced at the tip end of the blade is too weakened depending on the punching rate or type of the punching blade, so that the resin layer might remain unpunched on its side opposite to the blade entering surface. Therefore, there is a need for improvement in punching workability.

With regard to the polyethylene-based resin foam sheet comprises a polyolefin-based resin layer laminated on at least one side of the polyethylene-based resin foam layer, as a result of earnest studies, the present inventors have found that the workability (cuttability) of polyethylene-based resin foam sheets while maintaining ESCR is improved by controlling a phase structure of a mixture of polypropylene and polyethylene in the polyolefin-based resin layer so as to have a specific structure, and, at last, completed the present invention.

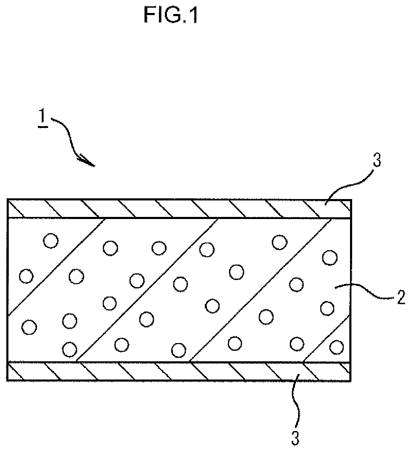

Hereinafter, embodiments of a polyethylene-based resin foam sheet (hereinafter also referred to merely as "foam sheet") according to the present invention will be described. Fig. 1 is a schematic cross sectional view illustrating one embodiment of the polyethylene-based resin foam sheet according to the present invention.

The polyethylene-based resin foam sheet of the embodiment illustrated in Fig. 1 has a polyethylene-based resin foam layer 2 and polyolefin-based resin layers 3 laminated on both sides of the polyethylene-based resin foam layer 2.

In this polyethylene-based resin foam sheet 1, the polyolefin-based resin layers 3 comprise a mixture of a polypropylene-based resin with a melting point of 135°C or lower produced using a metallocene catalyst, and a polyethylene-based resin.

In the polyolefin-based resin layer 3, a sea-island structure is formed on the interface side with the polyethylene-based resin foam layer 2, the sea-island structure comprising a polyethylene-based resin as a sea component and a polypropylene-based resin as an island component. Also, a sea-sea structure having a co-continuous phase of a polyethylene-based resin and a polypropylene-based resin is formed on the surface side of the polyolefin-based resin layer.

(Foam layer)

The polyethylene-based resin foam layer 2 (hereinafter also referred to merely as "foam layer") is composed of a polyethylene-based resin. The "polyethylene-based resin" as used herein refers to those containing 50 mol% or more, preferably 70 mol% or more, more preferably 90 mol% or more of an ethylene component unit. Examples of the polyethylene-based resin can include one or two or more of polyethylenes such as high-density polyethylene, low-density polyethylene and linear low-density polyethylene and ethylene-based copolymers such as ethylene-vinyl acetate copolymers and ethylene-methyl methacrylate copolymers.

The ranges of the densities of the respective polyethylenes are defined as follows. The "high-density polyethylene" refers to polyethylene-based resins having a density of more than 940 $kg/m^3$. The "low-density polyethylene" refers to polyethylene-based resins having a long-chain branched structure and a density of 910 $kg/m^3$ or more and less than 930 $kg/m^3$. The "linear low-density polyethylene" refers to polyethylene-based resins which are copolymers of ethylene and $\alpha$-olefin with 4 or more and 8 or less carbon atoms and have a substantially linear molecular chain and a density of 910 $kg/m^3$ or more and 940 $kg/m^3$ or less. Also, the lower limit of the density of the polyethylene-based resins is generally around 910 $kg/m^3$. Among these polyethylene-based resins, those comprising low-density polyethylene as the main component are preferred. Here, the phrase "comprising low-density polyethylene as the main component" means that low-density polyethylene is contained in an amount of 50% by weight or more based on the total weight of the polyethylene-based resins. The low-density polyethylene content of the polyethylene-based resin is more preferably 70% by weight or more, further preferably 80% by weight or more, especially preferably 90% by weight or more.

Styrenic resins such as polystyrene, elastomers such as ionomers and ethylene-propylene rubber, butene-based resins such as polybutene, vinyl chloride-based resins such as polyvinyl chloride, etc. can also be appropriately added to the polyethylene-based resin foam layer 2 within a range which would not inhibit the objects and effects of the present invention. The amount of these materials to be added in this case is preferably 30% by weight or less, more preferably 20% by weight or less, further preferably 10% by weight or less based on the total weight of the polyethylene-based resins contained in the molten resin for formation of the polyethylene-based resin foam layer 2 (molten resin for foam layer formation).

(Melt viscosity of the polyethylene-based resin in foam layer)

The melt viscosity at 190°C and a shear rate of 100 $sec^{-1}$ of the polyethylene-based resin for producing the polyethylene-based resin foam layer 2 preferably ranges from 500 to 1500 Pa·s. When the melt viscosity falls within this range, the polyethylene-based resin which constitutes a foam layer exhibits appropriate elongation during the foaming and provides a good foam layer. From this viewpoint, the melt viscosity more preferably ranges from 600 Pa·s to 1200 Pa·s, more preferably ranges from 700 Pa·s to 1000 Pa·s.

(Measurement of melt viscosity (Pa·s))

The melt viscosity can be measured as follows, for example, using a measurement machine such as Capirograph 1 D manufactured by TOYO SEIKI SEISKU-SHO, LTD. Specifically, such a measurement machine is prepared, and a resin to be measured for melt viscosity is prepared and used as a sample for measurement. The measurement machine is provided with a cylinder having a cylinder diameter of 9.55 mm and a length of 350 mm and an orifice having a nozzle diameter of 1.0 mm and a length of 10 mm, and is controlled so that the set temperature of the cylinder and orifice is 190°C. A necessary amount (for example, about 15 g) of the sample for measurement is put in the cylinder, and allowed to stand for 4 minutes to prepare a molten resin. The molten resin is extruded into strings through the orifice at a shear rate of 100 $sec^{-1}$ to measure the viscosity of the molten resin at the time of extrusion. This value can be defined as the melt viscosity.

(Thickness of foam layer)

The thickness of the polyethylene-based resin foam layer 2 preferably ranges from 0.2 mm to 10 mm, more preferably ranges from 0.5 mm to 3 mm.

For example, the thickness of the polyethylene-based resin foam layer 2 can be measured as follows. Specifically, the polyethylene-based resin foam sheet 1 is cut vertically to the extrusion direction, and the thickness of this cross-section is micrographed at 10 points at equal intervals in the width direction. From the photograph taken, the thicknesses of the polyethylene-based resin foam sheet 1 and polyolefin-based resin layers 3 are measured. The arithmetic average values of the respective measurement values obtained are defined as the thicknesses of the polyethylene-based resin foam sheet 1 and polyolefin-based resin layers 3. Next, the value obtained by subtracting the thus-obtained thickness of the polyolefin-based resin layers 3 from that of the polyethylene-based resin foam sheet 1 is defined as the thickness of the polyethylene-based resin foam layer 2.

(Open cell content of foam layer)

The open cell content of the polyethylene-based resin foam layer 2 is preferably 20% or less, more preferably 10% or less from the viewpoint that the polyethylene-based resin foam sheet 1 can provide sufficient cushioning properties when used as partitions, packings, etc. The open cell content can be adjusted to a target value by controlling, for example, the amount of a cell control agent, temperature for extruding the polyethylene-based composition which forms the polyethylene-based resin foam layer 2, temperature for extruding the polyethylene-based resin composition which forms the polyolefin-based resin layer 3, and amount (thickness) of the rein layer laminated.

The open cell content: S (%) is a value calculated, based on the following relational expression (Expression 2), from the actual volume (sum of the volume of closed cells and the volume of resin part): Vx(L) of the polyethylene-based resin foam sheet 1 obtained using the test piece cut from the polyethylene-based resin foam sheet 1 by means of Air Comparison Pycnometer Model 930 manufactured by Beckman-Toshiba, Co., Ltd., in conformity with procedure C described in ASTM D2856-70.

[Mathematical Formula 3]

$$(\text{Expression 2}) \ S \ (\%) = (V_a - V_x) \times 100 / (V_a - W / \rho)$$

wherein Va, W and p are as follows:

Va: apparent volume (L) of the polyethylene-based resin foam sheet;
W: weight (g) of the polyethylene-based resin foam sheet; and
p: density (g/L) of the resin forming the polyethylene-based resin foam sheet.

The density p (g/L) of the resin forming the polyethylene-based resin foam sheet and the weight W (g) of the polyethylene-based resin foam sheet can be obtained from samples prepared by defoaming polyethylene-based resin foam sheets by heat pressing and cooling the sheets. Also, a value calculated from the outer dimensions can be employed as the appearance volume Va (L) of the polyethylene-based resin foam sheet.

(Resin layer)

The polyolefin-based resin layers 3 comprise a mixture of a polypropylene-based resin with a melting point of 135°C or lower produced using a metallocene catalyst and a polyethylene-based resin. The polyolefin-based resin layers 3 preferably comprises a mixture of 20 to 80% by weight of the polypropylene-based resin and 20 to 80% by weight of the polyethylene-based resin (provided that the total of the polypropylene-based resin and the polyethylene-based resin is 100% by weight). The blending ratio of the components to be incorporated in the mixture are more preferably 20 to 50% by weight of metallocene-based polypropylene with a melting point of 135°C or lower produced using a metallocene catalyst and 50 to 80% by weight of metallocene-based linear low-density polyethylene.

The polyethylene-based resin foam sheet 1 has excellent ESCR since the polyolefin-based resin layer 3 is formed from a mixture of a polypropylene based resin with a melting point of 135°C or lower produced using a metallocene catalyst and a polyethylene-based resin, which show specific morphology.

As the polyethylene-based resin 8 which constitutes the polyolefin-based resin layer 3, polyethylene-based resins similar to those which can be used in the polyethylene-based resin foam layer 2 can be selected.

The polypropylene-based resin 5 which constitutes the polyolefin-based resin layer 3 preferably comprises an ethylene-propylene random copolymer. As the ethylene-propylene random copolymer, used are those polymerized using a metallocene-based polymerization catalyst and having a melting point of 135°C or lower. The ethylene-propylene random copolymer includes copolymers comprising ethylene and propylene as well as any other component, for example, 1-butene as a copolymer component.

When polypropylene having a melting point of higher than 135°C is used as the polypropylene-based resin 5, the temperature of the foam layer-forming molten resin for forming the polyethylene-based resin foam layer must inevitably be set to be higher than the temperature suitable for foaming because of considerably increased load and pressure of an extruder, etc., thereby causing a risk of deterioration in closed cell content of the polyethylene-based resin foam sheet 1. Even if the temperature of the molten resin for foam layer formation can be lowered to the temperature suitable for foaming, the crystallization of the polypropylene resin may result in uneven sheet surfaces and significantly increased viscosity leading to cracks formed in the polyolefin-based resin layer 3, thereby causing a deteriorated surface state of the foam sheet. Also, the cracking of the polyolefin-based resin layer 3 may deteriorate ESCR and mechanical properties. The polypropylene-based resin 5 is an ethylene-propylene random copolymer, which is polymerized using a metallocene-based polymerization catalyst, having a melting point of 135°C or lower, and thus is easier to disperse in the polyethylene-based resin 8 and can reduce various risks including unevenness and cracking of the resin layer 3 as described above.

The melting point of the polypropylene-based resin 5 is preferably 130°C or lower, more preferably 125°C or lower from the viewpoint of maintaining the closed cell content of the polyethylene-based resin foam layer 2 at a high level. The lower limit on the melting point of the polypropylene-based resin 5 can be defined as generally 100°C or higher, preferably 110°C or higher from the viewpoint of take-up stability when the sheet is cooled on a cooling tube.

The melting point can be measured by a method in accordance with JIS K7121 (1987). Specifically, the temperature is elevated at 10°C/min. under the conditions defined in item (2) of "Control of Test Piece State" (provided that the cooling rate is 10°C/min.) to obtain a melting peak. The temperature at the apex of the melting peak obtained is defined as the melting point. When two or more melting peaks appear, the temperature at the apex of the melting peak having the largest area is defined as the melting point.

(Metallocene-based polymerization catalyst)

Examples of the metallocene-based catalyst for the polymerization of the polypropylene-based resin having a melting point of 135°C or lower can include molecules in which two cyclopentadienyl rings or substituted cyclopentadienyl rings are covalently bound to a transition metal such as titanium, zirconium, hafnium, vanadium or chromium selected from Groups IVb, Vb and VIb in the periodic table, and catalyst systems comprising aminoxane.

For the mixture of the polyolefin-based resin layer 3 (molten resin for resin layer formation comprising a polypropylene-based resin and a polyethylene-based resin), the melting viscosity at 190°C and a shear rate of 100 sec$^{-1}$ is preferably 500 Pa·s to 2000 Pa·s, and the PI value represented by the following relational expression (1) is preferably $2 \leq PI \leq 10$:

[Mathematical Formula 4]

$$\text{(Expression 1) PI value} = (\eta_{PP} \times \varphi_{PE})/(\eta_{PE} \times \varphi_{PP})$$

wherein $\eta_{PP}$: melting viscosity at 190°C and a shear rate of 100s$^{-1}$ of the polypropylene-based resin; ($\varphi_{PE}$: volume fraction of the polyethylene-based resin; $\eta_{PE}$: melting viscosity at 190°C and a shear rate of 100s$^{-1}$ of the polyethylene-based resin; and $\varphi_{PP}$: volume fraction of the polypropylene-based resin.

The PI value can be controlled by relatively raising the viscosity of the polypropylene-based resin (relatively lowering the viscosity of the polyethylene-based resin) or increasing the volume fraction of the polyethylene-based resin (reducing the volume fraction of the polypropylene-based resin). Coextrusion of the mixture of the molten resin for foam layer formation 10 and the polyolefin-based resin layer 3 controlled to have a PI value of 2 or more and 10 or less as described above can result in formation, in the polyolefin-based resin layer 3, of a sea-island structure having a continuous phase of the polyethylene-based resin and a dispersion phase of the polypropylene-based resin on the interface side with the polyethylene-based resin foam layer 2 and a sea-sea structure having a co-continuous phase of the polyethylene-based resin and the polypropylene-based resin on the surface side of the resin layer 3.

This PI value is preferably larger than 3, more preferably larger than 4 in order to increase the punching workability of the polyethylene-based resin foam sheet 1. On the other hand, the upper limit on the PI value is generally around 10 in order to provide a good dispersion state of the polypropylene-based resin in the polyethylene-based resin.

Also, the blending ratio of the polyethylene-based resin and polypropylene-based resin to be incorporated in the polyolefin-based resin layer 3 are more preferably not less than 50% by weight and not more than 80% by weight for the polyethylene-based resin and not less than 20% by weight and not more than 50% by weight for the polypropylene-based resin, for easy adjustment of this PI value.

The viscosity at 190°C and a shear rate of 100 sec$^{-1}$ of the polypropylene-based resin preferably ranges from 500 Pa·s to 2500 Pa·s, more preferably ranges from 1000 Pa·s to 2000 Pa·s because PI value is easier to control and the viscosity thereof when mixed with the polyethylene-based resin is suitable for film formation. From similar viewpoints, the viscosity at 190°C and a shear rate of 100 sec$^{-1}$ of the polyethylene-based resin preferably ranges from 100 Pa·s to 2000 Pa·s, more preferably ranges from 200 Pa·s to 1500 Pa·s, further preferably 300 Pa·s to 1000 Pa·s.

The volume fractions of the polypropylene-based resin and polyethylene-based resin in the relational expression (Expression 1) mean the volume fractions of the respective resins when the sum of the volumes of the polypropylene-based resin and polyethylene-based resin which constitute the polyolefin-based resin layer 3 is 100. The volume fraction of the polypropylene-based resin contained in the polyolefin-based resin layer 3 is preferably 0.2 or more, and, in that case, can provide good ESCR. The upper limit on the volume fraction of the polypropylene-based resin in the polyolefin-based resin layer 3 is preferably 0.8, and the volume fraction, when falling within this range, provides good adhesion to the foam layer 2.

In order to form, in the polyolefin-based resin layer 3, a sea-island structure having a continuous phase of the polyethylene-based resin and a dispersion phase of the polypropylene-based resin on the interface side with the polyethylene-based resin foam layer 2 and a sea-sea structure having a co-continuous phase of the polyethylene-based resin and the polypropylene-based resin on the surface side of the resin layer 3, the volume fraction of the polypropylene-based resin contained in the polyolefin-based resin layer 3 is more preferably 0.6 or less, further preferably 0.5 or less. The volume fraction of the polypropylene-based resin contained in the polyolefin-based resin layer 3, when falling within this range, can improve the punching workability of the polyethylene-based resin foam sheet 1 while maintaining ESCR.

Further, for the polyolefin-based resin layer 3, the ratio ($\eta_{PP}/\eta_{PE}$) of the melting viscosity ($\eta_{PP}$) at 190°C and a shear rate of 100 sec$^{-1}$ of the polypropylene-based resin to the melting viscosity ($\eta_{PE}$) at 190°C and a shear rate of 100 sec$^{-1}$ of the polyethylene-based resin is preferably 0.5 or more and 10 or less. When the melting viscosity ratio ($\eta_{PP}/\eta_{PE}$) falls within this range, the polyethylene-based resin foam sheet 1 has a beautiful surface and exhibits good punching workability. From these viewpoints, the ratio more preferably ranges from 1 to 7, further preferably ranges from 2 to 5.

The polyolefin-based resin which constitutes the polyolefin-based resin layer 3 may comprise other resins within a range which would not inhibit the objects and effects of the present invention. Examples of other resins that can be appropriately added include styrene-based resins such as polystyrene, butene-based resins such as polybutene, elastomers such as ionomers and ethylene-propylene rubber, and vinyl chloride-based resins such as polyvinyl chloride. The amount of the resin to be added in this case is preferably 30% by weight or less, more preferably 20% by weight or less, especially preferably 10% by weight of less based on the total weight of the polyolefin-based resin contained in the molten resin for forming the polyolefin-based resin layer 3 (molten resin for resin layer formation 7).

Further, various additives may be added, in addition to the resin components as described above, to the polyolefin-based resin. Examples of the various additives include antioxidants, thermal stabilizers, antistatic agents, conductivity imparting agents, ultraviolet absorbers, flame retardants and inorganic fillers.

(Definition of "surface side of polyolefin-based resin layer" and "interface side between resin layer and foam layer")

As the morphology of the resin layer according to the present invention, a sea-island structure having a continuous phase of the polyethylene-based resin and a dispersion phase of the polypropylene-based resin is formed on the interface side between the resin layer and the foam layer; and a sea-sea structure having a co-continuous phase of the polyethylene-based resin and the polypropylene-based resin is formed on the surface side of the polyolefin-based resin layer 3. The phrase "surface side of the polyolefin-based resin layer" as used herein refers to a depth up to at least 3 μm from the surface of the resin layer. The phrase "interface side between the resin layer and the foam layer" as used herein refers to a depth up to at least 3 μm from the interface between the resin layer and the foam layer to the resin layer side.

The morphology of the resin layer can be confirmed in a transmission electron microphotograph (for example, × 8000) of the cross section in the thickness direction of the foam sheet.

(Basis weight of resin layer)

As the amount (basis weight (g/m$^2$)) of the polyolefin-based resin layer 3 to be laminated, the polyolefin-based resin layer 3 is preferably laminated, in a basis weight of 5 g/m$^2$ to 200 g/m$^2$, on at least one side of the polyethylene-based resin foam layer 2 of the polyethylene-based resin foam sheet 1 obtained. An amount of the polyolefin-based resin layer 3 to be laminated falling within this range is preferred as providing excellent punching workability while maintaining the target ESCR performance.

From this viewpoint, the amount of the polyolefin-based resin layer 3 to be laminated is preferably 10 g/m$^2$ or more, more preferably 15 g/m$^2$ or more. On the other hand, the amount is preferably 150 g/m$^2$ or less, more preferably 100 g/m$^2$ or less, from the viewpoint of the punching workability of the polyethylene-based resin foam sheet 1.

(How to determine basis weight of resin layer)

The basis weight ($g/m^2$) of the resin layer can be identified based on the following relational expression (Expression 3).

[Mathematical Formula 5]

$$\text{(Expression 3) Basis weight } (g/m^2) = 1000 \times Xd/(L \times W)$$

wherein Xd represents an amount of the resin layer to be discharged (kg/hour); W represents a width (m) of the foam sheet obtained; and L represents a length per unit time (m/hour) of the foam sheet obtained.

(Appearance density of foam sheet)

The appearance density of the polyethylene-based resin foam sheet 1 ranges from 90 $kg/m^3$ to 600 $kg/m^3$. Too low an appearance density of the polyethylene-based resin foam sheet 1 may make it difficult to obtain a foam sheet having a high closed cell content by coextrusion. On the other hand, too high an appearance density may result in poor punching workability. From these viewpoints, the appearance density of the polyethylene-based resin foam sheet 1 is preferably 120 $kg/m^3$ or more, more preferably 150 $kg/m^3$ or more. On the other hand, the upper limit on the appearance density is preferably 550 $kg/m^3$ or less, more preferably 500 $kg/m^3$ or less.

The appearance density ($kg/m^3$) of the polyethylene-based resin foam sheet 1 is determined by unit conversion of a value determined by dividing the basis weight ($g/m^2$) of the polyethylene-based resin foam sheet 1 by the thickness (mm) of the polyethylene-based resin foam sheet 1. Specifically, the appearance density is determined from the thickness of the polyethylene-based resin foam sheet 1 determined in the above manner and the basis weight of the polyethylene-based resin foam sheet 1 which will be described below. The basis weight ($g/m^2$) of the polyethylene-based resin foam sheet 1 can be determined by cutting out a test piece from the polyethylene-based resin foam sheet 1, measuring the weight (g) of the test piece and dividing the weight (g) by the area ($m^2$) of the test piece.

(Production method)

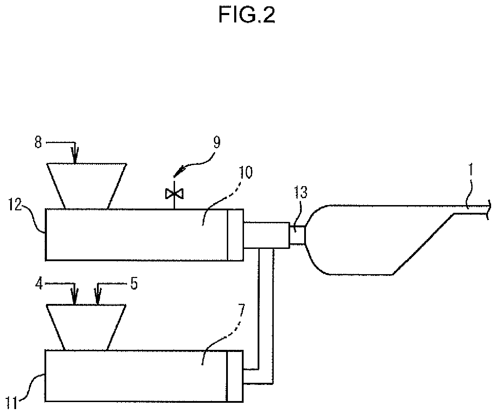

Next, one embodiment of a method for producing the polyethylene-based resin foam sheet according to the present invention will be described. Fig. 2 is a schematic view illustrating one embodiment of a method for producing the polyethylene-based resin foam sheet according to the present invention.

As illustrated in Fig. 2, a molten resin for foam layer formation 10 is obtained by feeding the polyethylene-based resin 8 which constitutes the polyethylene-based resin foam layer to a first extruder 12, heat-melting and kneading the resin to prepare a melt-kneaded product, feeding a blowing agent 9 and the like to this melt-kneaded product, and further kneading them.

The melt flow rate (MFR) of the polyethylene-based resin composition which constitutes the molten resin for foam layer formation 10 preferably ranges from 0.3 g/10 min. to 20 g/10 min. A MFR, when falling within this range, suppresses formation of open cells in the polyethylene-based resin foam layer 2 due to heat generation of the molten resin for foam layer formation 10 accompanying a rise in pressure applied to a die during extrusion foaming of a foam sheet, resulting in a foam sheet having suitable mechanical strength. From such a viewpoint, the MFR more preferably ranges from 1 g/10 min. to 15 g/10 min., further preferably ranges from 2 g/10 min. to 10 g/10 min. In the present specification, the melt flow rate (MFR) can be measured at a test temperature of 190°C and a nominal load of 2.16 kg in conformity with JIS K7210-1:2014. When the polyethylene-based resin is a mixture, the MFR of the mixture is identified by the MFR measured for a product preliminarily melt-kneaded by an extruder.

Usable blowing agents include inorganic blowing agents and organic physical blowing agents which are similar to those conventionally used in the production of polyethylene-based resin foams. Examples of inorganic blowing agents include oxygen, nitrogen, carbon dioxide and air, and examples of organic physical blowing agents include aliphatic hydrocarbons such as propane, normal-butane, iso-butane, normal-pentane, iso-pentane, normal-hexane, iso-hexane and cyclohexane; hydrocarbons such as methyl chloride and ethyl chloride; and fluorocarbons such as 1,1,1,2-tetrafluoroethane and 1,1-difluoroethane. Also, chemical blowing agents such as azodicarbonamide can be used. Such blowing agents can also be used as a mixture of two or more of them. Among these blowing agents, normal butane, isobutane or those comprising a mixture thereof as the main component can be preferably used from the viewpoint of their excellent compatibility with the polyethylene-based resin and foaming properties, or carbon dioxide or those comprising carbon dioxide as the main component can be preferably used from the environmental or cost viewpoint.

The amount of the blowing agent to be added is appropriately controlled depending on the kind of the blowing agent and the density of the intended foam. Specifically, the amount of the blowing agent to be added preferably ranges from 0.05 part by weight to 10 parts by weight, more preferably ranges from 0.1 part by weight to 5 parts by weight, further preferably ranges from 0.1 part by weight to 3 parts by weight, per 100 parts by weight of the polyethylene-based resin for producing the foam layer.

Also, a cell control agent, various additives and the like are appropriately fed to the first extruder 12, together with the polyethylene-based resin 8, according to need.

Both of organic and inorganic cell control agents can be used. Examples of inorganic cell control agents can include metal borates such as zinc borate, magnesium borate and borax, sodium chloride, aluminum hydroxide, talc, zeolite, silica, calcium carbonate and sodium hydrogen carbonate. Examples of organic cell control agents can include sodium 2,2-methylenebis(4,6-tert-butylphenyl)phosphate, sodium benzoate, calcium benzoate, aluminum benzoate and sodium stearate. Combinations of citric acid with sodium hydrogen carbonate or of an alkali salt of citric acid with sodium hydrogen carbonate can also be used as cell control agents. These cell control agents can be used as a mixture of two or more of them.

The amount of the cell control agent to be added is controlled depending on the intended cell diameter. The amount of the cell control agent to be added preferably ranges from 0.01 parts by weight to 5 parts by weight, more preferably ranges from 0.05 parts by weight to 2 parts by weight, per 100 parts by weight of the polyethylene-based resin which constitutes the foam layer.

Examples of the various additives include nucleating agents, antioxidants, thermal stabilizers, antistatic agents, conductivity imparting agents, ultraviolet absorbers, flame retardants and inorganic fillers.

A molten resin for resin layer formation (mixture of a polypropylene-based resin and a polyethylene-based resin) 7 for forming the polyolefin-based resin layer is obtained by feeding the polyethylene-based resin 4 and the polypropylene-based resin 5 with a melting point of 135°C or lower produced using a metallocene catalyst and the like, which constitutes the polyolefin-based resin layer 3, to the second extruder 11, and heat-melting and kneading them. Next, the molten resin for foam layer formation 10 and the molten resin for resin layer formation 7 are adjusted to their proper temperatures, then introduced into a circular die 13 in Fig. 2, and further coextruded from the circular die 13, thereby forming a tubular polyethylene-based resin foam sheet. The tubular polyethylene-based resin foam sheet has a laminate structure in which the polyolefin-based resin layer 3 is laminated on at least one side of the polyethylene-based resin foam layer 2. The polyethylene-based resin foam layer and the polyolefin-based resin layer are laminated in the circular die 13 and then coextruded to improve the adhesion strength between the layers. The resin layer 3 is preferably an outermost layer in order to improve the punching workability while maintaining ESCR of the polyethylene-based resin foam sheet.

The tubular polyethylene-based resin foam sheet is cooled by appropriately using, for example, a method of passing the sheet through a cooling device. That is to say, the thus-formed tubular polyethylene-based resin foam sheet is taken up in a state where the inner surface of the tubular polyethylene-based resin foam sheet is along the side peripheral surface of the cooling device, and thereby cooled. Also, the tubular polyethylene-based resin foam sheet can be cooled by blowing cold air or the like to the outer surface of the sheet, according to need. Known devices that are used in the field of extrusion foaming can be used as the cooling device. Specifically, examples of the cooling device can include those in a columnar shape, those in which cooling tubes are continuously aligned into a ring in the extrusion direction and those in which cooling pipes are formed into a basket, and, among others, a columnar cooling device with a simple structure and good cooling efficiency is preferred.

The tubular polyethylene-based resin foam sheet is cut open, along the extrusion direction, into a sheet while the sheet is taken up, thereby forming the polyethylene-based resin foam sheet 1. The tubular polyethylene-based resin foam sheet can be either cut open while it is cooled by the cooling device or cut open after cooling. Known devices conventionally used in the field of extrusion foaming can be appropriately used as the circular die, extruder, and device for cutting open the tubular polyethylene-based resin foam sheet.

By such a method, there can be produced a polyethylene-based resin foam sheet with an appearance density of 90 to 600 kg/m$^3$ having a polyethylene-based resin foam layer and a polyolefin-based resin layer laminated on at least one side of the polyethylene-based resin foam layer by coextrusion, wherein the polyolefin-based resin layer comprises a mixture of a polypropylene-based resin with a melting point of 135°C or lower produced using a metallocene catalyst, and a polyethylene-based resin, and wherein, in the polyolefin-based resin layer, a sea-island structure having a continuous phase of the polyethylene-based resin and a dispersion phase of the polypropylene-based resin is formed on the interface side with the polyethylene-based resin foam layer, and a sea-sea structure having a co-continuous phase of the polyethylene-based resin and the polypropylene-based resin is formed on the surface side of the polyolefin-based resin layer.

Examples of the methods for adjusting the thickness of the polyethylene-based resin foam layer 2 and the amount of the polyolefin-based resin layer 3 to be laminated at the time of coextrusion of the molten resin for foam layer formation 10 and molten resin for resin layer formation 7 include adjustment of the discharge level of the foam layer-forming molten resin for forming a foam layer and the discharge level of the resin layer-forming molten resin for forming a resin layer, adjustment of the intervals between flow paths of the die attached to a tip end of the extruder, and a combination thereof.

The foam sheet of the present invention is formed by coextruding the molten resin for resin layer formation 7 obtained by kneading a polypropylene-based resin with a melting point of 135°C or lower polymerized using a metallocene catalyst and a polyethylene-based resin, with the molten resin for foam layer formation 10.

At this time, the polypropylene-based resin would finely be dispersed in the polyethylene-based resin in the molten resin for resin layer formation 7 at an extrusion temperature which would not inhibit foaming of the foam layer. Then, there are realized the formation of a sea-island structure having a continuous phase of the polyethylene-based resin and a dispersion phase of the polypropylene-based resin on the interface side between the molten resin for resin layer formation 7 and the molten resin for foam layer formation 10, and a sea-sea structure having a co-continuous phase of the polyethylene-based resin and the polypropylene-based resin on the surface side of the polyolefin-based resin layer.

The PI value determined from the melting viscosities and volume fractions of the polypropylene-based resin and polyethylene-based resin of the resin layer is defined $2 \leq PI \leq 10$, thereby making it possible to form the above phase configuration more certainly.

The reason why the polyethylene-based resin and polypropylene-based resin form a co-continuous layer on the surface side of this foam sheet is considered to be because the polypropylene-based resin on the surface side of the molten resin for resin layer formation 7 is drawn by shearing with the die internal wall when the molten resin for resin layer formation 7 having a specific incorporation blending ratio is coextruded with the molten resin for foam layer formation 10.

The present invention also includes the following embodiments:

In a first embodiment the invention relates to a polyethylene-based resin foam sheet with an appearance density of 90 to 600 kg/m$^3$, comprising:

a polyethylene-based resin foam layer; and
a polyolefin-based resin layer laminated on at least one side of the polyethylene-based resin foam layer by coextrusion,
wherein the polyolefin-based resin layer comprises a mixture of a polypropylene-based resin with a melting point of 135°C or lower produced using a metallocene catalyst and a polyethylene-based resin, and
the polyolefin-based resin layer has a sea-island structure formed on the interface side with the polyethylene-based resin foam layer and a sea-sea structure formed on the surface side of the polyolefin-based resin layer, the sea-island structure having a continuous phase of the polyethylene-based resin and a dispersion phase of the polypropylene-based resin, and the sea-sea structure having a co-continuous phase of the polyethylene-based resin and the polypropylene-based resin.

In a second embodiment the invention relates to a polyethylene-based resin foam sheet with an appearance density of 90 to 600 kg/m$^3$, comprising:

a polyethylene-based resin foam layer; and
a polyolefin-based resin layer laminated on at least one side of the polyethylene-based resin foam layer by coextrusion,

wherein the polyolefin-based resin layer comprises a mixture of a polypropylene-based resin with a melting point of 135°C or lower produced using a metallocene catalyst and a polyethylene-based resin, and has a PI value represented by the following relational expression (1) for the melting viscosities ($\eta_{PP}$, $\eta_{PE}$) and volume fractions ($\varphi_{PP}$, $\varphi_{PE}$) of the polypropylene-based resin and the polyethylene-based resin of $2 \leq PI \leq 10$:
[Mathematical Formula 1]

$$\text{(Expression 1) PI value} = (\eta_{PP} \times \varphi_{PE})/(\eta_{PE} \times \varphi_{PP})$$

wherein $\eta_{PP}$: melting viscosity at 190°C and a shear rate of 100s$^{-1}$ of the polypropylene-based resin; ($\varphi_{PE}$: volume fraction of the polyethylene-based resin; $\eta_{PE}$: melting viscosity at 190°C and a shear rate of 100s$^{-1}$ of the polyethylene-based resin; and $\varphi_{PP}$: volume fraction of the polypropylene-based resin.

In a third embodiment the invention relates to a polyethylene-based resin foam sheet according to the first or second embodiments, wherein the polyolefin-based resin layer comprises a mixture of 20 to 80% by weight of the polypropylene-based resin and 20 to 80% by weight of the polyethylene-based resin (provided that the total of the polypropylene-based resin and the polyethylene-based resin is 100% by weight).

In a fourth embodiment the invention relates to a polyethylene-based resin foam sheet according to any one of the first to third embodiments, wherein the ratio ($\eta_{PP}/\eta_{PE}$) of the melting viscosity ($\eta_{PP}$) at 190°C and a shear rate of 100 sec$^{-1}$ of the polypropylene-based resin to the melting viscosity ($\eta_{PE}$) at 190°C and a shear rate of 100 sec$^{-1}$ of the polyethylene-based resin, in the polyolefin-based resin layer, is 2 or more and less than 7.

In a fifth embodiment the invention relates to a polyethylene-based resin foam sheet according to any one of the first to fourth embodiments, wherein the melting viscosity at 190°C and a shear rate of 100 sec$^{-1}$ of the mixture of the polyolefin-based resin layer ranges from 500 Pa·s to 2000 Pa·s.

In a sixth embodiment the invention relates to a polyethylene-based resin foam sheet according to the first embodiment, wherein the PI value represented by the following relational expression (1) for the melting viscosities ($\eta_{PP}$, $\eta_{PE}$) and volume fractions ($\varphi_{PP}$, $\varphi_{PE}$) of the polypropylene-based resin and the polyethylene-based resin which constitute the polyolefin-based resin layer is $2 \leq PI \leq 10$:

[Mathematical Formula 2]

$$\text{(Expression 1) PI value} = (\eta_{PP} \times \varphi_{PE})/(\eta_{PE} \times \varphi_{PP})$$

wherein $\eta_{PP}$: melting viscosity at 190°C and a shear rate of 100s$^{-1}$ of the polypropylene-based resin; ($\varphi_{PE}$: volume fraction of the polyethylene-based resin; $\eta_{PE}$: melting viscosity at 190°C and a shear rate of 100s$^{-1}$ of the polyethylene-based resin; and $\varphi_{PP}$: volume fraction of the polypropylene-based resin.

Examples

Hereinafter, the polyethylene-based resin foam sheet of the present invention will be described in detail based on Examples, but is not limited to the following Examples.

<1> Resin material

Resin materials indicated in Table 1 given below were used as polyethylene-based resins (E1 to E5) for forming a polyethylene-based resin foam layer, and polyethylene-based resins (E1 to E5) and polypropylene-based resins (P1 and P2) for forming a polyolefin-based resin layer. In Table 1, metallocene LLDPE is linear low-density polyethylene polymerized using a metallocene-based polymerization catalyst. LDPE is low-density polyethylene. Metallocene random PP is an ethylene-propylene random copolymer copolymerized using a metallocene-based polymerization catalyst.

[Table 1]

Table 1

| Abbreviation | Grade | Manufacturer | Type | Density (kg/m3) | Melting point (°C) | MFR (g/10 min.) | Viscosity* (Pa · s) |
|---|---|---|---|---|---|---|---|
| E1 | NC564A | Japan Polyethylene Corporation | Metallocene LLDPE | 918 | 124 | 3.5 | 1426 |
| E2 | NUC-8321 | Nippon Unicar Company Limited | LDPE | 920 | 111 | 2.4 | 787 |
| E3 | NH745N | Japan Polyethylene Corporation | Metallocene LLDPE | 913 | 121 | 8 | 593 |
| E4 | NH845N | Japan Polyethylene Corporation | Metallocene LLDPE | 913 | 121 | 15 | 353 |

(continued)

| Abbreviation | Grade | Manufacturer | Type | Density (kg/m3) | Melting point (°C) | MFR (g/10 min.) | Viscosity* (Pa · s) |
|---|---|---|---|---|---|---|---|
| E5 | DNDV0405R | Japan Polyethylene Corporation | LDPE | 915 | 105 | 32 | 199 |
| P1 | WFX4T | Japan Polypropylene Corporation | Metallocene random PP | 900 | 123 | 7 | 832 |
| P2 | WFX6 | Japan Polypropylene Corporation | Metallocene random PP | 900 | 123 | 2 | 1390 |

<2> Preparation of polyethylene-based resin foam sheet

(Example 1)

The multi-layer polyethylene resin foam sheets were produced by using a coextrusion device in which an extruder for foam layer formation (tandem extruder having an internal diameter: 90 mm and an internal diameter: 120 mm) and an extruder for resin layer formation (internal diameter: 50 mm) were coupled to one circular die (die lip diameter: 110 mm) via a cross bar.

0.2 Parts by weight of carbon dioxide as a blowing agent, 0.7 part by weight of "FINECELL MASTER SSC-PO217K" manufactured by Dainichiseika Color & Chemicals Mfg, Co., Ltd., which was a mixture of monosodium citrate and sodium hydrogen carbonate, as a cell control agent, based on 100 parts by weight of the resin (E2) for foam layer formation, were fed to the extruder for foam layer formation to heat, melt and knead them, thereby preparing a molten resin for foam layer formation. The resin was introduced into the circular die while the resin temperature was adjusted to 121°C.

On the other hand, as the resin for resin layer formation, the polyethylene-based resin (E3) and polypropylene-based resin (P2) indicated in Table 1 were fed to the extruder for resin layer formation to heat, melt and knead them, thereby preparing a molten resin for resin layer formation. The resin was introduced into the circular die while the resin temperature was adjusted to 162°C.

The molten resin for foam layer formation and molten resin for resin layer formation were converged in the die, and the converged resins were extruded from the die lip into the atmospheric air at a discharge level of 110 kg/hour, thereby forming a tubular polyethylene-based resin foam sheet having resin layers laminated on both sides thereof (discharge level of the entire molten resin for resin layer formation: 6 kg/hour, and total discharge level of the entire molten resin for resin layer formation and the molten resin for foam layer formation: 110 kg/hour).

The speed for taking up this tubular polyethylene-based resin foam sheet was adjusted to attain the basis weight of each layer as shown in Table 2. The sheet was cooled by passing it through a columnar cooling device (diameter: 212 mm and length: 1500 mm) while the internal surface thereof was along the peripheral surface of the cooling device. Then, the tubular polyethylene-based resin foam sheet was cut open along the extrusion direction, thereby obtaining a polyethylene-based resin foam sheet in which polyolefin-based resin layers were laminated on both sides of the polyethylene-based resin foam layer.

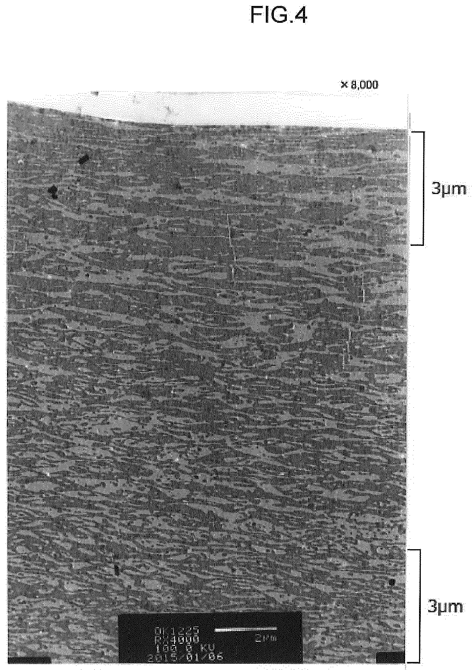

When the cross section of this polyethylene-based resin foam layer was observed, as shown in Fig. 4, it was confirmed that, in the polyolefin-based resin layer, a sea-island structure including a sea component of the polyethylene-based resin and an island component of the polypropylene-based resin was formed in the cross section on the side adjacent to the polyethylene-based resin foam layer (around 3 $\mu$m to the resin layer side from the interface between the resin layer and the foam layer), and a co-continuous structure composed of the polypropylene-based resin and polyethylene-based resin was formed in the cross section on the surface side (around 3 $\mu$m from the surface of the resin layer).

(Examples 2 to 5)

A polyethylene-based resin foam sheet was obtained in a similar way as in Example 1 except the use of resins indicated in Table 2 as the resin for resin layer formation and blending ratio thereof to be incorporated. A cross sectional structure similar as in Example 1 was confirmed also for the polyolefin-based resin layer of this polyethylene-based resin sheet.

(Comparative Example 1)

A polyethylene-based resin foam sheet was obtained in a similar way as in Example 1 except the blending ratio of the polyethylene-based resin and polypropylene-based resin of the polyolefin-based resin layer, which resins were used as those for resin layer formation, was changed as indicated in Table 2. When the cross section of this polyethylene-based resin foam sheet was observed, it was confirmed that a sea-sea structure composed of the polypropylene-based resin and the polyethylene-based resin was formed over the cross section of the polyolefin-based resin layer, as shown in Fig. 4.

(Comparative Example 2)

A polyethylene-based resin foam sheet was obtained in a similar way as in Example 1 except the blending ratio of the polyethylene-based resin and polypropylene-based resin of the polyolefin-based resin layer was changed as indicated in Table 2. It was confirmed that the polyolefin-based resin layer of this polyethylene-based resin foam sheet also had a similar cross section as in Comparative Example 1.

<3> Evaluation method

(1) Evaluation of punching workability

A punching machine equipped with a doughnut-shaped punching blade with an outer diameter of 30 mm and an inner diameter of 18 mm was used to carry out punching 30 times. The number of the punched doughnut-shaped sheets a part of which still remained connected to the original sheets from which the doughnut-shaped sheets had been cut was counted to be classified as follows.

    excellent: Number of sheets remaining partly unpunched of 0
    good : Number of sheets remaining partly unpunched of 1 to 5
    poor : Number of sheets remaining partly unpunched of 6 to 12
    bad Number of sheets remaining partly unpunched of 13 or more

(2) Evaluation of ESCR

Laminates having a width of 30 mm and a length of 50 mm were cut out from the polyethylene-based resin foam sheets obtained from Examples and Comparative Examples. The cut-out laminate were wound around the circumferential surface of a steel tube with an outer diameter of 8 mm so as not to form any gap with the surface of the resin layer to be measured facing outward, and stapled. Thereafter, the steel tube around which the laminates were wound was immersed in an aqueous solution adjusted to 50°C and containing 10% by weight of Nonipol 160 (manufactured by Sanyo Chemical Industries, Ltd.) dissolved therein to observe the state of the resin layer. Five or more pieces for each sample were immersed, and the time until more than half of samples were cracked on their surfaces was defined as ESCR cracking time.

(3) Surface state

The surface state of the sheets was visually observed.

    excellent: Sheet surface was smooth and beautiful.
    good : Sheet surface was slightly uneven.

<4> Results

Table 2 indicates the thickness, basis weight of the respective layers (in Table 2, the polyolefin-based resin layer is indicated merely as resin layer, and the polyethylene-based resin foam layer merely as foam layer), appearance density, open cell content, ESCR, and punching workability of the polyethylene-based resin foam sheets obtained from Examples and Comparative Examples.

## [Table 2]

| | Foam layer | | Resin layer | | | | | | | | | | | | | Foam sheet physical property | | | | | | | |
|---|---|---|---|---|---|---|---|---|---|---|---|---|---|---|---|---|---|---|---|---|---|---|---|
| | Resin | Open cell ratio | Polyethylene-based resin | | | Polypropylene-based resin | | | | PI | Viscosity ratio (PP/PE) | Melting viscosity of mixture (η pc) | Morphology of resin layer (PE/PP) | | Appearance density | Thickness | Total basis weight | Basis weight of resin layer per side | Laminate configuration (resin layer/foam layer/resin layer) | ESCR failure time | Surface state | Punching workability |
| | | | Resin | Incorporation proportion | Volume fraction | Resin | Melting point | Incorporation proportion | Volume fraction (φPP) | | | | Surface | Interface side | | | | | | | | |
| | - | % | - | wt% | - | - | °C | wt% | - | - | - | Pa·s | - | - | kg/m³ | mm | g/m² | g/m² | g/m² | hr | - | - |
| Example 1 | E2 | 4 | E5 | 70 | 0.70 | P2 | 123 | 30 | 0.30 | 3.39 | 2.3 | 833 | Sea-sea | Sea-island | 460 | 1.5 | 690 | 20 | 20/650/20 | >1440 | excellent | excellent |
| Example 2 | E1 | 4 | E1 | 70 | 0.70 | P2 | 123 | 30 | 0.30 | 2.24 | 1.0 | 1415 | Sea-sea | Sea-island | 460 | 1.5 | 690 | 20 | 20/650/20 | >1440 | excellent | good |
| Example 3 | E2 | 4 | E4 | 50 | 0.50 | P2 | 123 | 50 | 0.50 | 3.48 | 3.9 | 873 | Sea-sea | Sea-island | 460 | 1.5 | 690 | 20 | 20/650/20 | >1440 | excellent | excellent |
| Example 4 | E3 | 4 | E5 | 50 | 0.50 | P2 | 123 | 50 | 0.50 | 6.89 | 7.0 | 799 | Sea-sea | Sea-island | 460 | 1.5 | 690 | 20 | 20/650/20 | >1440 | good | excellent |
| Example 5 | E2 | 4 | E5 | 30 | 0.30 | P2 | 123 | 70 | 0.70 | 2.85 | 7.0 | 1026 | Sea-sea | Sea-island | 460 | 1.5 | 690 | 20 | 20/650/20 | >1440 | good | good |
| Comparative Example 1 | E2 | 4 | E1 | 50 | 0.50 | P1 | 123 | 50 | 0.50 | 0.57 | 0.6 | 1126 | Sea-sea | Sea-sea | 460 | 1.5 | 690 | 20 | 20/650/20 | >1440 | excellent | poor |
| Comparative Example 2 | E2 | 4 | E5 | 50 | 0.50 | P1 | 123 | 50 | 0.50 | 1.38 | 1.4 | 713 | Sea-sea | Sea-sea | 460 | 1.5 | 690 | 20 | 20/650/20 | >1440 | excellent | poor |

A calculation example of the PI value of the resin layer indicated in Table 2, in the case of Example 1, is indicated below.

$$\text{PI value} = (\eta_{PP} \times \varphi_{PE})/(\eta_{PE} \times \varphi_{PP})$$

$\eta_{PP}$ = viscosity (1390 Pa·s) of polypropylene-based resin (P2);
$\varphi_{PE}$ = volume fraction of polyethylene-based resin (E3);
$\eta_{PE}$ = viscosity (593 Pa·s) of polyethylene-based resin (E3);
$\varphi_{PP}$ = volume fraction of polypropylene-based resin (P2)

$$\varphi_{PE} = (W_{PE}/\rho_{PE})/(W_{PE}/\rho_{PE} + W_{PP}/\rho_{PP})$$
$$= (0.7/0.913)/(0.7/0.913+0.3/0.900)$$
$$= 0.697$$

$$\varphi_{PP} = (W_{PP}/\rho_{PP})/(W_{PE}/\rho_{PE} + W_{PP}/\rho_{PP})$$
$$= (0.3/0.900)/(0.7/0.913+0.3/0.900)$$
$$= 0.303$$

$W_{PE}$ = blending ratio of polyethylene-based resin (E3) to be incorporated (70 wt%/100 = 0.7)
$\rho_{PE}$ = resin density of polyethylene-based resin (E3) (0.913 g/cm$^3$)
$W_{PP}$ = blending ratio of polypropylene-based resin (P2) to be incorporated (30 wt%/100 = 0.3)
$\rho_{PP}$ = resin density of polypropylene-based resin (P2) (0.900 g/cm$^3$)

As indicated in Table 2, in the polyolefin-based resin layer, a sea-island structure having a continuous phase of the polyethylene-based resin and a dispersion phase of the polypropylene-based resin was formed on the interface side with the polyethylene-based resin foam layer, and a sea-sea structure having a co-continuous phase of the polyethylene-based resin and the polypropylene-based resin was formed on the surface side of the polyolefin-based resin layer. Also, Examples 1 to 5 were confirmed to exhibit excellent ESCR and punching workability.

Contrary to this, Comparative Examples 1 and 2 having no such a cross sectional structure as in Examples 1 to 5 exhibited insufficient punching workability.

Reference Signs List

1    polyethylene-based resin foam sheet
2    polyethylene-based resin foam layer
3    polyolefin-based resin layer

**Claims**

1. A polyethylene-based resin foam sheet with an appearance density of 90 to 600 kg/m$^3$, comprising:

   a polyethylene-based resin foam layer; and
   a polyolefin-based resin layer laminated on at least one side of the polyethylene-based resin foam layer by coextrusion,
   wherein the polyolefin-based resin layer comprises a mixture of a polypropylene-based resin with a melting point of 135°C or lower produced using a metallocene catalyst and a polyethylene-based resin, and
   the polyolefin-based resin layer has a sea-island structure formed on the interface side with the polyethylene-based resin foam layer and a sea-sea structure formed on the surface side of the polyolefin-based resin layer, the sea-island structure having a continuous phase of the polyethylene-based resin and a dispersion phase of the polypropylene-based resin, and the sea-sea structure having a co-continuous phase of the polyethylene-based resin and the polypropylene-based resin.

2. The polyethylene-based resin foam sheet according to claim 1, wherein the polyolefin-based resin layer comprises a mixture of 20 to 80% by weight of the polypropylene-based resin and 20 to 80% by weight of the polyethylene-based resin (provided that the total of the polypropylene-based resin and the polyethylene-based resin is 100% by weight).

3. The polyethylene-based resin foam sheet according to claim 1 or claim 2, wherein the ratio ($\eta_{PP}/\eta_{PE}$) of the melting viscosity ($\eta_{PP}$) at 190°C and a shear rate of 100 sec$^{-1}$ of the polypropylene-based resin to the melting viscosity ($\eta_{PE}$) at 190°C and a shear rate of 100 sec$^{-1}$ of the polyethylene-based resin, in the polyolefin-based resin layer, is 2 or more and less than 7.

4. The polyethylene-based resin foam sheet according to any one of claims 1 to 3, wherein the melting viscosity at 190°C and a shear rate of 100 sec$^{-1}$ of the mixture of the polyolefin-based resin layer ranges from 500 Pa·s to 2000 Pa·s.

FIG.1

FIG.2

# FIG.3

FIG.4

Europäisches
Patentamt

European
Patent Office

Office européen
des brevets

## EUROPEAN SEARCH REPORT

Application Number

EP 16 20 1000

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2007 284126 A (MITSUI CHEMICAL FABRO INC) 1 November 2007 (2007-11-01) * paragraph [0010]; claim 1 * ----- | 1-4 | INV. C08L23/08 |

TECHNICAL FIELDS SEARCHED (IPC)

C08L

The present search report has been drawn up for all claims

| Place of search | Date of completion of the search | Examiner |
|---|---|---|
| Munich | 16 February 2017 | Rouault, Yannick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 20 1000

This annex lists the patent family members relating to the patent documents cited in  the above-mentioned European search report.
The members are as contained in the European Patent Office EDP file on
The European Patent Office is in no way liable for these particulars which are merely given for the purpose of information.

16-02-2017

| Patent document cited in search report | Publication date | Patent family member(s) | Publication date |
|---|---|---|---|
| JP 2007284126 A | 01-11-2007 | NONE | |

EPO FORM P0459

For more details about this annex : see Official Journal of the European Patent Office, No. 12/82

**EP 3 156 446 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014055248 A
- EP 2708344 A1
- US 2014070442 A1